# EUROPEAN PATENT APPLICATION

(11) **EP 1 233 324 A2**
(43) Date of publication of application: **21.08.2002**
(21) Application number: 02001889.1
(22) Date of filing: 28.01.2002
(51) Int. Cl.: G06F 1/00, H04L 29/06, H04L 9/32, H04N 7/16

(54) **Data distribution system**

(30) Priority: 16.02.2001 JP 2001039489
(71) Applicant: MATSUSHITA ELECTRIC INDUSTRIAL CO., LTD., Kadoma City, Osaka Pref., 571-8501 (JP)
(72) Inventor: Koyama, Kazuhiro, Toyonaka City, Osaka Pref., 561-0804 (JP); Niwa, Hisao, Kyoto 612-213 (JP); Inagaki, Satoru, Suita City, Osaka Pref., 564-0063 (JP); Tsuzuki, Takashi, Osaka 547-0044 (JP)
(74) Representative: Kirschner, Klaus Dieter, Dipl.-Phys.

(57) **Abstract**

A change request input unit for utilization restriction information is provided in a user terminal of a data distribution system. A conversion unit gives a digital signature to the change request, encrypts it and transmits it to a data creator terminal through a communication unit and a network. Upon receipt of valid rewrite authorization for the utilization restriction information from the data creator terminal, the changed utilization restriction information is rewritten into a storage medium through a storage medium interface in accordance with the contents of the authorization given from a determination unit, thereby implementing a function in which a user can change the set utilization restriction under the valid authorization.

## Description

The present invention relates to a data distribution system that enables per-user utilization conditions to be set in detail in data distribution performed via a network and that enables a user to change the set utilization conditions under the authorization of a data distributor.

Various techniques have been developed for restrictions for utilization conditions at a user terminal in digital data distribution. For example, Japanese Unexamined Patent Publication No. 10-294726 (1998) discloses a method of an electronic watermarking technique to embed copyright information in an authored work, thereby enabling the protection of the authored work to be implemented.

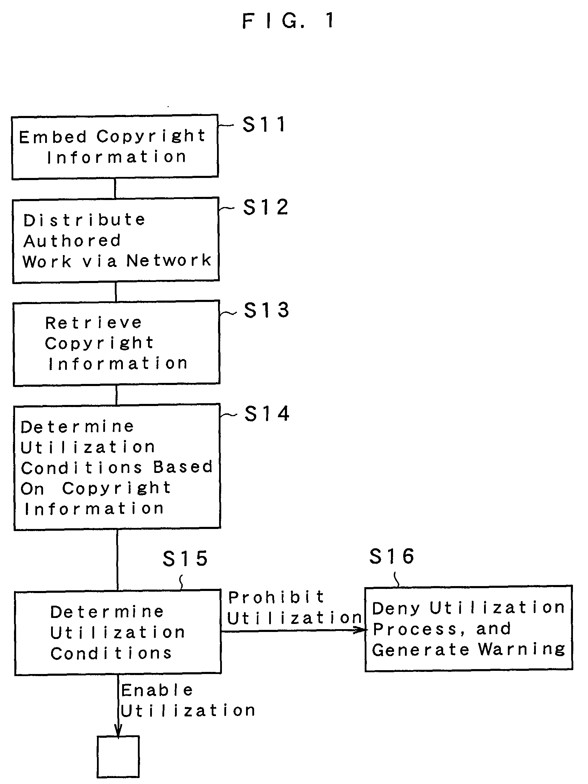

Fig. 1 is an explanatory view showing process steps that are performed between a data distribution side and a user side in a conventional data distribution system. To carry out distribution and utilization methods for an authored work, at step S11, per-user utilization restriction information is embedded into the authored work as copyright information according to an electronic watermarking technique. At step S12, the authored work containing the embedded copyright information and key information necessary for retrieving the copyright information are provided to a user terminal via a network. At step S13, the user terminal retrieves the copyright information from the authored work based on the key information. At step S14, utilization conditions are determined according to the copyright information. At step S15, a determination is made whether or not a process desired to be used through the user terminal is enabled. At step S16, if the utilization is prohibited, the utilization process is not executed, and a warning is issued.

Moreover, there are some other conventional techniques, for example, a method in which copyright information is regulated in various ways, and a method in which copyright information once regulated is provided to be changeable on a user terminal side.

However, conventional techniques as described above are inefficient in that when utilization restriction information is desired to be changed under the authorization of a data creator, a data distribution side needs to create a new authored work in which utilization restriction information is embedded by means of an electronic watermarking technique, and then the data distribution side needs to send the new authored work to a user terminal. Moreover, as long as the field of a system that enables utilization restriction information to be changeable under the authorization of a data creator is concerned as a prerequisite, there is not any copyright management systems proposed so far, which include a method in which a rewrite request issued from a user terminal side for rewriting utilization restriction information is transmitted to the side of a data creator, the rewrite request can be securely verified, and information transmission can thereby be securely implemented between the user terminal and a terminal of the data creator.

The present invention is made in view of the above-described problems occurring in the conventional cases. An object of the present invention is to provide a data distribution system that enables utilization conditions for a user terminal to be set in detail and that enables the user terminal to change the utilization conditions under the authorization of a data creator.

The present invention is arranged such that when data is to be distributed by a data creator terminal, which creates the data, to a user terminal which uses the data, utilization restriction information for specifying items that can be used by the user terminal can be set by the data creator terminal, and the utilization restriction information can be changed by the user terminal under the authorization of the data creator terminal.

In addition, in the present invention, when data is distributed by a data creator terminal, which creates the data, to a user terminal, which uses the data, a management center preserves distribution records of the data. When data is distributed to a predetermined user terminal, utilization restriction information can be set for the user terminal, and the set utilization restriction information and distribution data are managed using a center database provided in the management center. Moreover, upon receipt of a change request for the utilization restriction information from the user terminal, when the data creator terminal authorizes utilization conditions to be changed, the utilization restriction information in the data distributed to the user terminal can be changed. Furthermore, the contents of the change are recorded in the center database provided in the management center.

Embodimants of the invention are now described with reference to the drawings in which:
Fig. 1 is an explanatory view showing process steps that are performed between a data distribution side and a user side in a conventional data distribution system;
Fig. 2 is a configuration view of a data creator terminal used in a data distribution system of a first embodiment according to the present invention;
Fig. 3 is a configuration view of a user terminal used in the data distribution system of the first embodiment and a data distribution system of a second embodiment according to the present invention;
Fig. 4 is an explanatory view of distribution format data used in the data distribution systems of the first and second embodiments of the present invention;
Fig. 5 is a process view showing a method of creating a change request list in the data distribution system of the first or second embodiment of the present invention;
Fig. 6 is an example of a display of a utilization restriction information changing request in the data distribution system of the first or second embodiment of the present invention;
Fig. 7 is a configuration view of a data creator terminal used in the data distribution system of the second embodiment according to the present invention;
Fig. 8 is a configuration view of a management center used in the data distribution system of the second embodiment of the present invention; and
Fig. 9 is an explanatory view showing example display area restrictions in the data distribution system of the second embodiment of the present invention.

Before a data distribution system of the present invention is described, cryptography techniques, a digital signature technique and a hash conversion will be described. The encryption techniques include a secret key cryptography and a public key cryptography. The secret key cryptography uses an identical encryption key for encryption and decryption. In the secret key cryptography, while encryption and decryption can be performed at a high rate in comparison to the public key cryptography, since an encryption side and a decryption side need to preliminarily hold common encryption keys (secret keys), a risky case may occur in that the secret key is disclosed in a course of holding the secret keys.

On the other hand, the public key cryptography is characterized in that information is encrypted using a public key, and decryption is performed using a key called a "private key". As such, a data reception side can generate a pair of a public key and a private key, and can disclose the public key to the public. A data transmission side can encrypt data by using the public key, and can transmit the encrypted data to the reception side. The rate of risk at which a private key required for data decryption is disclosed in the secret key cryptography may be lower than that in the secret key cryptography.

Then, the digital signature technique will be described. The digital signature technique is a method of converting data by using a private key that is used in the public key cryptography. A sender who desires to transmit data containing a digital signature uses his/her own private key to convert data desired to be transmitted. Upon receipt of the data containing the digital signature, a recipient converts the data by using a public key. At this time, when proper data is obtained, the digital signature can be determined to be correct. This technique is enabled when only the data sender knows the private key.

Then, the hash conversion will be described. The hash conversion is characterized by performing a one-way conversion for producing a specific-sized conversion result with high randomness for data. In addition, the hash conversion is characterized in that a conversion result that is identical to the result of a hash conversion performed for certain data is not produced through an identical hash conversion performed for different data.

### FIRST EMBODIMENT

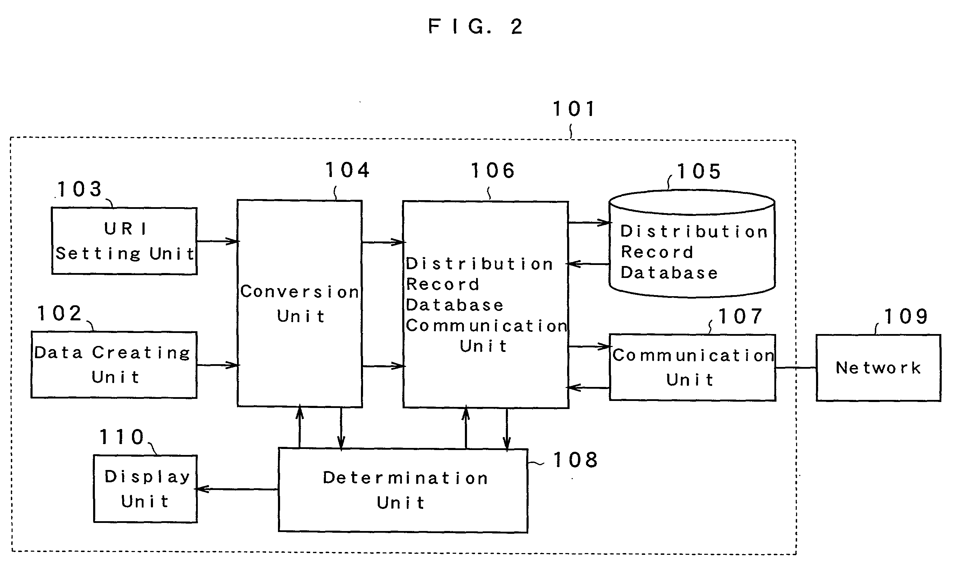

A data distribution system of a first embodiment according to the present invention will be described below with reference to the drawings. In view of hardware, the data distribution system of the present embodiment is configured of a data creator terminal 101 and a user terminal 201. Fig. 2 is a configuration view of the data creator terminal 101. The data creator terminal 101 includes a function of creating data and a function of distributing the data to users.

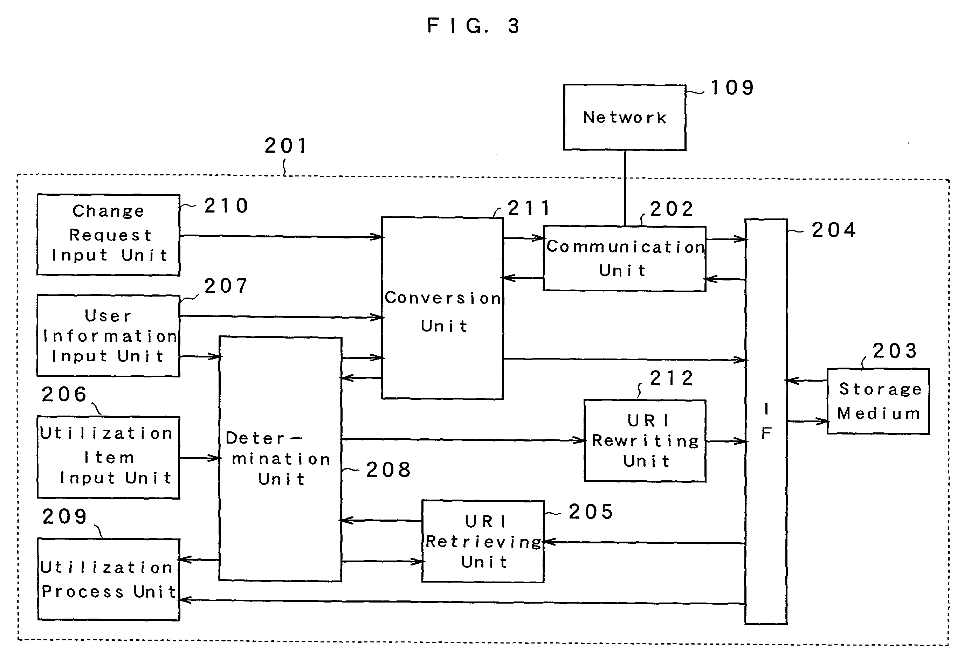

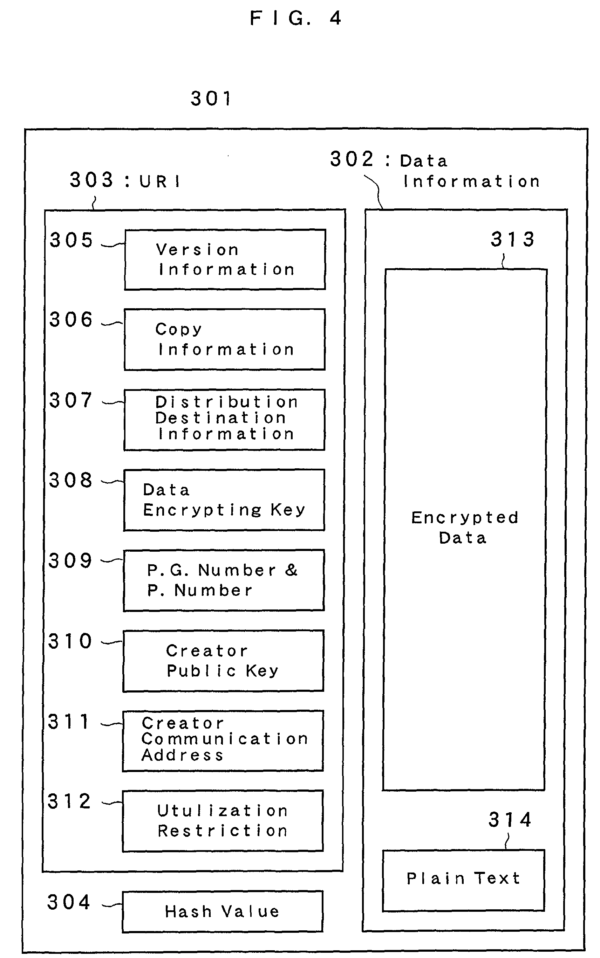

The user terminal 201 shown in Fig. 3 is used by a user to use the distributed data. Fig. 4 shows an example of a structure of a distribution format data 301 that is distributed from the data creator terminal 101 to the user terminal 201.

In the data creator terminal 101 shown in Fig. 2, a data creating unit 102 creates original data that is to be distributed. A utilization restriction information setting unit 103 sets a utilization restriction information (hereinafter refers to as URI in the figures) 303 in units of the distribution destination user terminal 201 for the original data. A conversion unit 104 is used as a first conversion unit to convert the created original data into the distribution format data 301. A distribution record database 105 preserves distribution records. A distribution record database communication unit 106 performs data communication with the distribution record database 105. A determination unit 108 is used as a first determination unit to determine the validity of a change request transmitted from the user terminal 201. A communication unit 107 is used as a first communication unit which is connected to a network 109 to communicate with the user terminal 201. A display unit 110 displays information regarding a change request for the utilization restriction information 303 transferred from the user terminal 201.

The user terminal 201 shown in Fig. 3 is connected to the data creator terminal 101 through the network 109 to use the distribution format data 301. In the user terminal 201, a communication unit 202 is used as a second communication unit to communicate with the data creator terminal 101 shown in Fig. 2. A storage medium 203 preserves the distribution format data 301 received through the communication unit 202. A storage medium interface (IF) 204 inputs and outputs data to the storage medium 203.

A utilization restriction information retrieving unit 205 retrieves the utilization restriction information 303 from the distribution format data 301 preserved in the storage medium 203 via the storage medium interface 204. A utilization item input unit 206 is used to input utilization items. A user information input unit 207 is used to input information regarding to a user which uses the user terminal 201. A determination unit 208 is used as a second determination unit to determine according to the results of input from the utilization restriction information retrieving unit 205, the utilization item input unit 206 and the user information input unit 207 as to whether the user can use the distribution format data 301.

When the data has been determined by the determination unit 208 to be usable, a utilization process unit 209 is used to use the original data. A change request input unit 210 is used to input a desired change item when changing the utilization restriction information 303 through the user terminal 201. A conversion unit 211 converts information that has been inputted from the change request input unit 210 and user-related information that has been inputted from the user information input unit 207 into a form items of information to be handled as an item of data, for example, a form storable into one file. The conversion unit also creates a change request list in a form transmittable to the data creator terminal 101. Concurrently, the conversion unit 211 is used as a second conversion unit. A utilization restriction information rewriting unit 212 is used to rewrite the utilization restriction information 303, which is stored in the storage medium 203, via the storage medium interface 204 when the change request list created in the conversion unit 211 is authorized in the data creator terminal 101.

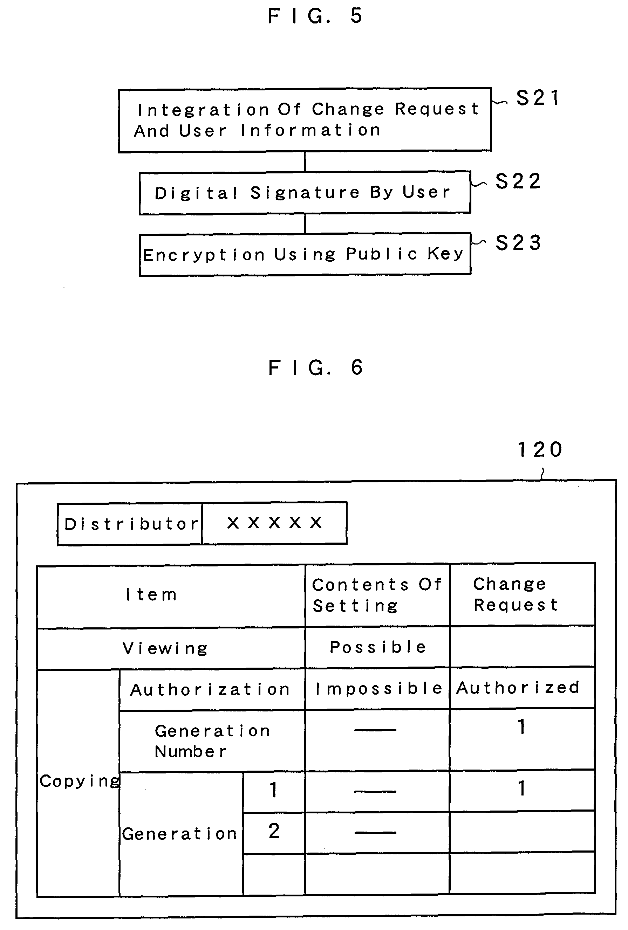

Fig. 5 shows a procedure of creating a change request list through the conversion unit 211. The procedure of creating the change request list is structured by including step S21 of incorporating (integrating) the change request and the utilization information into one item of data, step 22 of providing a digital signature of the user thereinto, and step S23 of performing encryption by using a public key.

In the data distribution system of the present embodiment, an assumption is made such that a public key and a private key are each preset for a data creator and a user, and these keys are registered in advance into the data creator terminal 101 and the user terminal 201. However, the arrangement may be made such that the public keys and the private keys for the data creator and the user are inputted as needs arise to the data creator terminal 101 and the user terminal 201. In the present embodiment, an assumption is made that a public key 1 and a private key 1 are allocated to the data creator, and a public key 2 and a private key 2 are allocated to the user.

As shown in Fig. 4, the distribution format data 301 includes the data information 302, the utilization restriction information 303, and a hash value 304. The utilization restriction information 303 is set for each distributed user, and is constituted of, for example, a version information 305, a copy information 306, a distribution destination information 307, a data encrypting key 308, a permissible generation number (P.G. number) and permissible number (P. number) for copying 309, a creator public key 310, a creator communication address 311, and utilization restriction data 312. The hash value 304 is generated through a preset hash conversion performed for the utilization restriction information 303.

The version information 305 is version information of the distribution format data 301. The copy information 306 represents the copy-version number (n-th copy (n = natural number)) and generation number of its own, which are indicated at the time of data creation as, for example, "0-th piece of the 0-th generation". The distribution destination information 307 is information relating to the distribution destination. The data encrypting key 308 represents key information (secret key 1) used to encrypt the original data according to the secret key cryptography. The P.G. number and P. number 309 is information relating to the permissible generation number and the permissible number for copying. The creator public key 310 is a public key (public key 1) of the data creator terminal 101. The creator communication address 311 is a communication address of the data creator terminal 101. The utilization restriction data 312 is variable depending on the contents of original data. For example, the data 312 represents replayability or non-replayability if original data represents a motion image, and the data 312 represents a replayable music number if original data represents a plurality of pieces of music. In addition, the data information 302 includes an encrypted data 313 (which will be referred to as "encrypted data" hereinafter) and a plain text 314 that is need not be encrypted.

A description will be made regarding a data distribution method to be executed in the data distribution system configured as described above. First, the data creator creates data by using the data creating unit 102 shown in Fig. 2. The utilization restriction information setting unit 103 sets information items for restricting utilization for each user. The information items include, for example, "data version: 1.0", "distributor: A", "copying: totally prohibited", and "viewing: authorized". The created data and utilization restriction information to be set are transferred to the conversion unit 104. Using the data encrypting key 308 (secret key 1), the conversion unit 104 converts the original data into the distribution format data 301, as shown in Fig. 4, by means of the secret key cryptography.

Using the public key 2 provided for each distribution destination user, the conversion unit 104 further encrypts the created distribution format data 301. The encrypted distribution format data 301 is transferred to the distribution record database communication unit 106, and is then registered into the distribution record database 105. Concurrently, the encrypted distribution format data 301 is transferred from the distribution record database communication unit 106 to the communication unit 107, and is then transmitted to the user terminal 201 via the network 109.

The communication unit 202 of the user terminal 201 shown in Fig. 3 receives a signal of the aforementioned data, and outputs the encrypted distribution format data 301 to the conversion unit 211. Using the private key 2 preset for the per-user in the user terminal 201, the conversion unit 211 decrypts the encrypted distribution format data 301. The determination unit 208 performs a hash conversion for the utilization restriction information 303, and compares the conversion result to the hash value 304. Thereby, the determination unit 208 verifies that the utilization restriction information 303 has not been revised. The decrypted distribution format data 301 is then stored into the storage medium 203 via the storage medium interface 204.

When a user of the user terminal 201 uses the distribution format data 301, the user enters a desired item to the user terminal 201 through the utilization item input unit 206, and enters user related information through the user information input unit 207. For example, the user enters a "view" command through the utilization item input unit 206, and enters a "password" of the user through the user information input unit 207.

From the entered password and the utilization restriction information 303 retrieved through the utilization restriction information retrieving unit 205, the determination unit 208 determines for the user whether the utilization item can be viewed or copied. If the determination unit 208 determines the utilization item to be usable, the utilization process unit 209 performs processes for the utilization item. In the above example, the distribution format data 301 stored in the storage medium 203 is retrieved through the storage medium interface 204. Then, the encrypted data 313 in the distribution format data 301 is decrypted using the data encrypting key 308 (secret key 1) in the distribution format data 301, and the data is displayed.

When the user of the user terminal 201 is desirous of changing the utilization restriction information 303 that has been once set, the user enters a change request through the change request input unit 210, and enters user information through the user information input unit 207.

At step S21 shown in Fig. 5, the change request and the user information are integrated into one file, and the data is converted into the change request list in the transmittable format to the data creator terminal 101. At the subsequent step S22, a digital signature is given using the user private key 2 of the user terminal 201. Moreover, in the step S23, encryption is performed using the public key 1 of the data creator terminal 101.

The encrypted change request list is transmitted from the communication unit 202 to the data creator terminal 101 through the network 109. The data-creator terminal 101 receives the encrypted change request list through the communication unit 107, the conversion unit 104 decrypts the data by using the private key 1, and the determination unit 108 verifies the digital signature by using the public key 2. If the digital signature is verified to be valid, the change request list is displayed on the display unit 110, and an inquiry is issued to the data creator to obtain authorization for changing the utilization restriction information 303. For example, if the user desires to obtain authorization only for copying one generation and one time, a display content 120 as shown in Fig. 6 is displayed.

While viewing the display, the data creator enters a response through the utilization restriction information setting unit 103 as to whether to authorize the requested change. In response to the entry result, the conversion unit 104 generates a digital signature of the data creator. Then, the response is converted into change determination information representing whether the change for the utilization restriction information 303 has been authorized. The change determination information is further encrypted in the conversion unit 104 with the public key 2 set for the transmission destination user, and is then transmitted by the communication unit 107 to the user terminal 201.

Upon receipt of the encrypted change determination information, the user terminal 201 decrypts the data by using the private key 2 in the conversion unit 211, and verifies the digital signature through the determination unit 208. If the digital signature is valid, the utilization restriction information rewriting unit 212 updates the utilization restriction information 303 in the distribution format data 301 stored in the storage medium 203.

In using the data distribution system, a case arises in which data once distributed is desired to be redistributed after the data has been revised. In this case, the revised data is inputted from the data creating unit 102 of the data creator terminal 101, and the version information 305 is inputted from the utilization restriction information setting unit 103. At this time, the determination unit 108 compares the data to the contents of the distribution record database 105, and thereby determines whether the data has been revised. If the data is determined to have been revised, the conversion unit 104 adds identical utilization restriction information 303 to the data, and thereby converts the data into the distribution format data 301 for the user terminal 201 that is identical to that in the previous distribution information recorded in the distribution record database 105. The distribution format data 301 is distributed to the identical user terminal 201. In addition, a record of the redistribution is preserved in the distribution record database 105. In this way, the data creator terminal 101 manages the records of redistributions.

On the other hand, in the user terminal 201, when the utilization process unit 209 is created a copy of the distribution format data 301, a communication address of a redistribution destination is entered through the utilization item input unit 206. The communication address of the redistribution destination, which has been entered through the utilization item input unit 206, and the version information 305 retrieved from the utilization restriction information retrieving unit 205 are integrated as redistribution information into one file.

The redistribution information is given a digital signature by the conversion unit 211 by using the private key 2 preset for the user terminal 201, and is encrypted using the public key 1 of the data creator terminal 101. The encrypted redistribution information is transmitted from the communication unit 202 to the data creator terminal 101. The data creator terminal 101 receives the encrypted redistribution information through the communication unit 107. The conversion unit 104 decrypts the redistribution information by using the private key 1, and the determination unit 108 verifies the digital signature. If the determination unit 108 determines the redistribution information to have been transmitted from a valid user terminal 201, the redistribution information is recorded into the distribution record database 105 through the distribution record database communication unit 106.

In addition, also when a user terminal A performs re-redistribution of the distribution format data 301 to a user terminal B, the distribution record database 105 can similarly be updated using the creator communication address 311. According to the above, even when the distribution format data 301 is to be redistributed many times, the data creator terminal 101 can update the distribution record database 105 for distribution of revised data. Moreover, revised data can be distributed to all those who preserve the distribution format data 301.

### SECOND EMBODIMENT

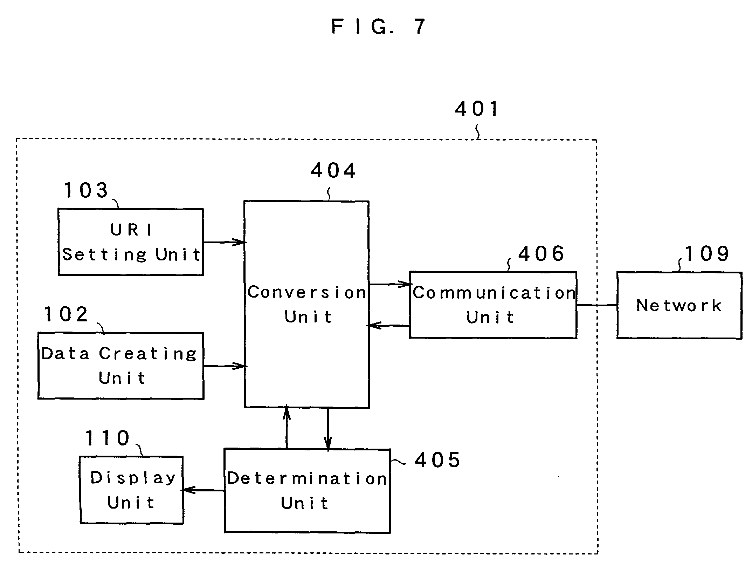

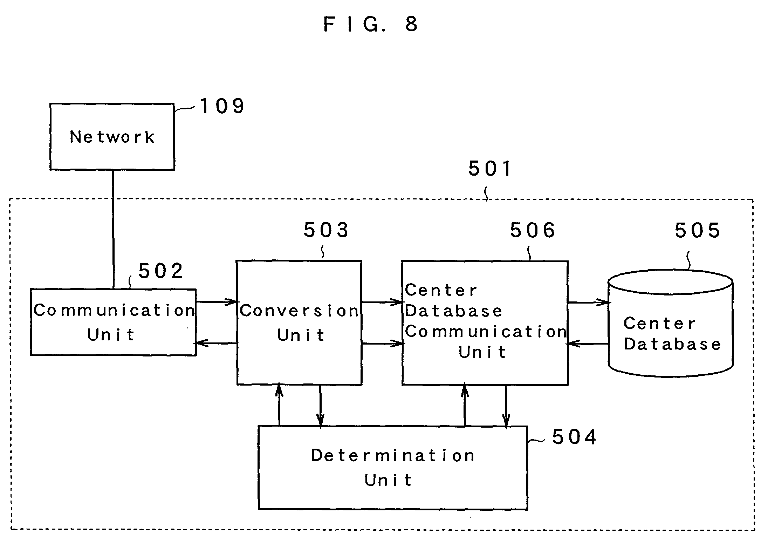

A data distribution system of a second embodiment according to the present invention will be described below with reference to the drawings. In view of hardware, the data distribution system of the present embodiment is configured of a data creator terminal 401, a user terminal 201, and a management center 501. Fig. 7 is a configuration view of the data creator terminal 401. Description will be made by assigning the same reference numerals to the same portions as those in the first embodiment. The data creator terminal 401 includes a function of creating data and a function of distributing the data to users. The management center 501 shown in Fig. 8 includes a function of managing data distribution records. With the management center 501 being provided as a new element, the data distribution system of the present embodiment effectively serves, particularly in a case in which data distribution frequently occurs between many data creator terminals 401 and many user terminals 201.

In the data creator terminal 401 shown in Fig. 7, a data creating unit 102 creates original data that is to be distributed. A utilization restriction information setting unit 103 sets utilization restriction information in units of the user terminal 201. A conversion unit 404 is used as a third conversion unit to convert the created original data into a distribution format data 301. A communication unit 406 is connected to a network 109, and is used as a third communication unit to communicate with the management center 501. A display unit 110 displays information regarding a change request for utilization restriction information 303 transmitted from the user terminal 201.

In the management center 501 shown in Fig. 8, a communication unit 502 is connected to the network 109, and is used as a fourth communication unit to communicate with either the data creator terminal 401 or the user terminal 201. A conversion unit 503 is used as a fourth conversion unit. For example, the conversion unit 503 converts the distribution format data 301 transmitted from the data creating unit 102 of the data creator terminal 401 into a format recordable into the center database 505 and that converts the distribution format data 301 into a format distributable to the user terminal 201. A determination unit 504 is used as a fourth determination unit that performs a determination as to whether the received distribution format data 301 is distributable and recordable, and a determination as to whether a change request to be performed by the user terminal 201 is transmitted from a valid user terminal. The center database 505 is used to preserve the distribution format data 301 and distribution records. A center database communication unit 506 is used to input and output data to the center database 505.

As in the first embodiment, also in the present embodiment, an assumption is made that a public key and a private key are each preset for the data creator and the user, and these keys are previously registered into the data creator terminal 401 and the user terminal 201. In the present embodiment, a public key 4 and a private key 4 are allocated for the data creator, and a public key 5 and a private key 5 are allocated to the management center 501, and a public key 2 and a private key 2 are allocated to the user. However, the arrangement may be made such that the public keys and the private keys for the data creator and the user are inputted as needs arise to the data creator terminal 401 and the user terminal 201.

Then, an operation of the present embodiment will be described below. First, as in the first embodiment, the data creator terminal 401 creates distribution data by using the data creating unit 102, and sets items for restricting utilization with the user terminal 201 by using the utilization restriction information setting unit 103. Similarly to the conversion unit 104 shown in Fig. 2, the conversion unit 404 converts the information into the distribution format data 301. In addition, the conversion unit 404 provides a digital signature into the information by using the private key 4, and encrypts the created distribution format data 301 in the distribution format by using the public key 5 of the management center 501.

The encrypted distribution format data 301 is transferred by the communication unit 406 to the management center 501 through the network 109. The management center 501 receives the encrypted distribution format data 301 through the communication unit 502. The conversion unit 503 decrypts the distribution format data 301 by using the private key 5 of the management center 501. Then, the determination unit 504 verifies the contents of the digital signature, thereby verifying the data to be a distribution request transmitted from a valid data creator.

In the distribution format data 301 verified by the determination unit 504, a communication address of the center is added to the utilization restriction information 303 through the conversion unit 503. The distribution format data 301 is encrypted by using the public key 2 of the user terminal 201 registered previously, and the encrypted distribution format data 301 is transmitted by the communication unit 502 to the user terminal 201. At this time, the determination unit 504 records the distribution format data 301 and a distribution record into the center database 505 via the center database communication unit 506. The distribution record represents the information of, for example, distribution date and time, which is used to perform rearrangement and grouping for the distribution format data 301. A utilization method of the distribution format data 301 with the user terminal 201 is the same as that in the first embodiment.

As in the first embodiment, in a case of changing the utilization restriction information 303 from a user, the user terminal 201 creates a change request list. The change request list generated by the conversion unit 211 is given a digital signature by using the private key 2, is encrypted by using the public key 5 of the management center 501, and is transmitted by the communication unit 202 to the management center 501.

The change request list received by the communication unit 502 of the management center 501 is decrypted in the conversion unit 503 by using the private key 5 of the management center 501. Then, the digital signature is verified by using the public key 4. The change request list, of which the digital signature has been verified, is encrypted by the conversion unit 503 by using the public key 4 of the data creator. At the same time, the change request list is recorded into the center database 505 through the center-database communication unit 506.

Moreover, the encrypted change request list is transmitted to the data creator terminal 401. The encrypted change request list is received by the communication unit 406, and is then fed into the conversion unit 404. The conversion unit 404 decrypts the change request list by using the private key 4 of the data creator terminal 401, and a determination unit 405 verifies the digital signature by using the public key 5 of the management center 501. Thereafter, as in the first embodiment, a change request is displayed on the display unit 110, and change determination information is created.

The change-determination information is given a digital signature of the data creator through the conversion unit 404, is encrypted by using the public key 5 of the management center 501, and is then transmitted to the management center 501. The management center 501 receives change authorization information through the communication unit 502. The conversion unit 503 decrypts the received change authorization information by using the private key 5. Then, the determination unit 504 verifies the digital signature given in the change authorization information, thereby verifying the information to have been transmitted from the data creator terminal 401.

Thereafter, the conversion unit 503 encrypts the change determination information by using the public key 2, and transmits the encrypted change determination information to the user terminal 201. By using the private key 2, the conversion unit 211 of the user terminal 201 decrypts the change determination information received through the communication unit 202. Then, the determination unit 208 verifies the digital signature given in the change determination information. As a result of the aforementioned determination, when the determination unit 208 determines the change determination information to have been received from the management center 501, as in the first embodiment, the utilization restriction information rewriting unit 212 changes the utilization restriction information 303 in the distribution format data 301. Moreover, the changed result is recorded into the center database 505 in the management center 501 and into the storage medium 203 of the user terminal 201.

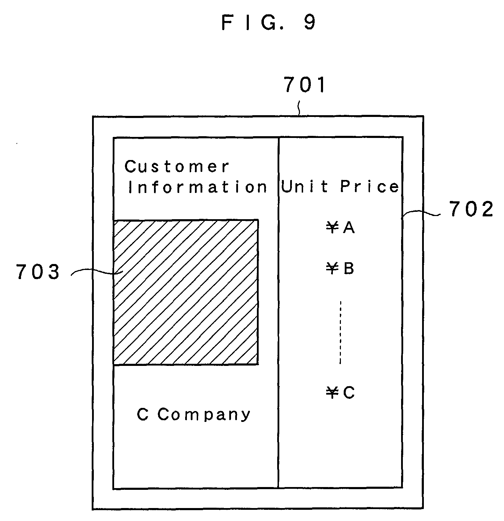

The utilization restriction information 303 in the data distribution system depends on the contents of original data, and represents information that is set for view prohibition, copy prohibition, the number of permissible generations for copying, and the permissible number for copying of each generation. The utilization restriction information 303 is added with information used for restricting the display area. Thereby, when data is text data, the display contents can be changed for each user without processing the original data. The restriction information of the display area includes, for example, the size of the display screen, the magnification rate of the display data, and a nondisplay area. Such an example is shown in Fig. 9. In the example shown in Fig. 9, the data in the utilization restriction information 303 is set with the window size 701 for displaying original data, a data magnification rate 702, and a nondisplay area 703. For example, when the same display area restriction information is set, the same display as that shown in Fig. 9 appears in all user terminals. The utilization restriction information as described above may also be applied to the first embodiment.

Moreover, time information may be added to the utilization restriction information 303. The time information represents time in which data can be accessed. The time information is provided for use in, for example, a case where a user does not use the user terminal 201 for a long time and a case where the distribution format data is authorized for temporary use by a different user. The time information can be set through input operation performed by the user from the utilization item input unit 206. The utilization restriction information rewriting unit 212 sets the time information to be set into the utilization restriction information 303 or stores into the storage medium 203 in a form associated with the distribution format data 301.

To reaccess the distribution format data 301 in which the time information is set, the determination unit 208 once verifies the existence of time information, and issues a request to the management center 501 to obtain time information. A determination can be made whether the data can be used by performing a comparison between time information transmitted from the management center 501 and the time information to be set. Alternatively, instead of the arrangement in which the request is issued to the management center 501, an arrangement may be made such that a time measuring unit is provided in the user terminal 201. These items of utilization restriction information may also be applied to the first embodiment.

In addition, in the data distribution system, when data once distributed is desired to be redistributed after the data has been revised, the revised data and distribution format data 301 in which only version information is set can be transmitted to the management center 501. In this case, the determination unit 504 of the management center 501 compares the data with data stored in the center database 505, and thereby determines whether the data is of a revised version. If the data is determined to be of a revised version, the conversion unit 503 adds the utilization restriction information 303 to the revised data, creates the distribution format data 301, and performs redistribution thereof. In this case, based on the utilization restriction information 303 for data that was previously distributed and that is recorded into the center database 505, identical utilization restriction information 303 is added to the user terminal 201 that is identical to that in the previous distribution information recorded into the center database 505. Then, a record of the revision is preserved into the center database 505.

As in the first embodiment, however, when distributing revised data according to the above-described method, the revised data is not distributed for the data redistributed from the user terminal 201 to the different user terminal A. In view of the problem, the management center 501 is used to manage redistribution records. As in the first embodiment, the user terminal 201 creates redistribution information. The redistribution information is given a digital signature by the conversion unit 211, and is encrypted by using the public key 5 of the management center 501.

The encrypted redistribution information is transmitted by the communication unit 202 to the management center 501. The transmission is performed using the communication address of the center, which has been added to the utilization restriction information 303. The conversion unit 404 of the data creator terminal 401 decrypts the encrypted distribution information by using the private key 5 of the management center 501, and the determination unit 405 verifies the digital signature of the user terminal 201. If the determination unit 504 of the management center 501 determines the redistribution information to have been transmitted from a valid user terminal 201, the redistribution information is recorded into the center database 505 through the center database communication unit 506.

Moreover, also when the user terminal A performs re-redistribution of the distribution format data 301 to the user terminal B, the distribution record database 105 can similarly be updated. According to the above, even when redistributing the distribution format data 301 many times, the management center 501 can update the center database 505 in each distribution of the revised data. In this way, revised data can be distributed to all those who preserve the distribution format data 301.

While the above-described data distribution system of each embodiment sets the utilization conditions in units of a user, the system can be used for, for example, intracompany data distribution. In this case, the utilization may be arranged such that the utilization conditions are not set in units of a user, and data may be distributed in the same conditions to all company staff members ranked a section chief or higher. In this case, each company staff member ranked a section chief or higher is enable to use distributed data by, for example, inputting his/her own password and/or employee identification number through the user information input unit 207. In this utilization case, the utilization restriction information 303 is changed in, for example, a case in which when redistributing data distributed to, for example, a section chief, to subordinate members of the section chief, a set number of copies becomes insufficient, and hence the number of copying is increased.

In each of the embodiments, a portable medium, such as a portable memory, may be used for the storage medium 203. This enables the user to use a memory (storage medium) as is used in the user terminal A. In this case, the same utilization restriction for data stored in the memory is applied to the individual user terminals A and B.

For the communication unit, a movable arrangement using a device with which data transmission and storage are possible through networks such as the Internet and an intranet is conceivable. Moreover, a device among all general-purpose devices may be used for the database in each of the above-described embodiments. The devices include, for example, an HDD, a flexible disk, a portable memory card, a CD-R, and a DVD-RAM.

As described above, according to the present invention, utilization conditions can be set in detail through a data creator terminal for data desired to be distributed, and the data can thereby be transmitted to the user terminal. In addition, a change request can be issued from the user side to the data creator terminal for changing the utilization conditions, and the data distribution terminal can verify the change request to authorize the change to be made.

Moreover, the provision of the management center for managing data distribution enables the system to manage data distribution records at one portion, in which a change request for utilization conditions can also be verified using the data distribution terminal.

Furthermore, since the display area is set in units of the user terminal at the time of distribution, the display area in the user terminal can be restricted without processing original data at each distribution time.

Yet furthermore, because of the arrangement in which the time information as utilization restriction information can be added by the user through the user terminal, data can be prevented from leaking when the data has been illegally retrieved by a third person.

Still furthermore, when data once distributed has been revised, setting of only the version information enables the revised data to be distributed to the user terminal in the same conditions as those applied before the data is revised.

It is to be understood that although the present invention has been described with regard to preferred embodiments thereof, various other embodiments and variants may occur to those skilled in the art, which are within the scope of the invention, and such other embodiments and variants are intended to be covered by the following claims.

## Claims

1. A data distribution system having a data creator terminal and a data user terminal, wherein
said data creator terminal comprises:
a data creating unit which creates data;
a utilization restriction information setting unit which sets utilization restriction information used for specifying at least one usable item in said user terminal at said data creator terminal when distributing said data to said user terminal;
a first conversion unit which converts said data into distribution format data on the basis of the utilization restriction information set by said utilization restriction information setting unit;
a first communication unit which communicates with said user terminal; and
a first determination unit which verifies whether a utilization information change request from said user terminal has been transmitted from a valid user terminal when changing a once-set utilization condition in response to a request from said user terminal,
and
said user terminal comprises:
a second communication unit which performs data communication with said data creator terminal;
a storage medium which records said distribution format data transmitted from said data creator terminal;
a utilization item input unit which inputs at least one utilization item for using said distribution format data preserved in said storage medium;
a user information input unit which inputs user information relating to a user of said user terminal;
a utilization restriction information retrieving unit which retrieves utilization restriction information from said distribution format data preserved in said storage medium;
a second determination unit which determines to be permitted of execution of the utilization item or not in said user terminal for said distribution format data on the basis of said utilization restriction information, said utilization item and said user information;
a utilization process unit which executes said utilization item for said distribution format data on the basis of a result determined by said second determination unit;
a change request input unit which inputs a change request of the utilization restriction information for said data creator terminal;
a second conversion unit which converts said change request inputted through said change request input unit into a form transmittable to the data creator terminal; and
a utilization restriction information rewriting unit which causes said change request to be integrated into said distribution format data in said storage medium when said change request has been authorized by said data creator terminal.

2. The data distribution system according to claim 1, wherein
said data creator terminal includes, as processes of said first conversion unit, the steps of: storing data identification information for uniformly defining said distribution format data when creating said distribution format data; encrypting said data by using a secret key 1 for encrypting by a secret key cryptography to store said data in said distribution format data; storing said utilization restriction information in said distribution format data; storing a hash value of the utilization restriction information in said distribution format data; storing said secret key 1 in said distribution format data; and encrypting said distribution format data by using a public key 2 which is a key of encryption of public key cryptography, and
said user terminal includes, as processes of said second conversion unit, the steps of: converting said change request into a form transmittable to said data creator terminal; and decrypting said distribution format data, which is encrypted by using said public key 2, by using a private key 2,
includes, as a process of said utilization restriction information retrieving unit, a step of hash converting said utilization restriction information to compare with a hash value in said distribution format data, and
includes, as a process of said utilization process unit, a step of decrypting the encrypted data by using said secret key 1.

3. The data distribution system according to claim 1, wherein
said data creator terminal further comprises:
a distribution record database which records said distribution data and utilization conditions set in units of said user terminal;
a distribution record database communication unit which inputs and outputs data to said distribution record database; and
a display unit which displays said change request list of which a digital signature has been verified by said first determination unit,
said user terminal includes, as processes of said second conversion unit, the steps of: converting the change request of said utilization restriction information and said user information into one change request list; giving a digital signature to said change request list; and encrypting said change request list, to which the digital signature is given, by using the public key 1,
includes, as processes of said second determination unit, the steps of: decrypting possibility/impossibility of change of the utilization restriction information transmitted from said data creator terminal by using the private key 2; and verifying the digital signature transmitted from said data creator terminal, and
includes, as a process of said utilization restriction information rewriting unit, a step of verifying said digital signature to rewrite said utilization restriction information,
and
said data creator terminal includes, as a process of said first conversion unit, a step of decrypting said change request list, which is transmitted from said user terminal, by using the private key 1,
includes, as a process of said first determination unit, a step of verifying the digital signature transmitted from said user terminal,
includes, as a process of said utilization restriction information setting unit, a step of inputting the possibility/impossibility of change of data utilization conditions, and
includes, as processes of said first conversion unit, the steps of: giving a digital signature to a result of said possibility/impossibility; and performing encryption by using the public key 2.

4. The data distribution system according to claim 2, wherein
said data creator terminal further comprises:
a distribution record database which records said distribution data and utilization conditions set in units of said user terminal;
a distribution record database communication unit which inputs and outputs data to said distribution record database; and
a display unit which displays said change request list of which a digital signature has been verified by said first determination unit,
said user terminal includes, as processes of said second conversion unit, the steps of: converting the change request of said utilization restriction information and said user information into one change request list; giving a digital signature to said change request list; and encrypting said change request list, to which the digital signature is given, by using the public key 1,
includes, as processes of said second determination unit, the steps of: decrypting possibility/impossibility of change of the utilization restriction information transmitted from said data creator terminal by using the private key 2; and verifying the digital signature transmitted from said data creator terminal, and
includes, as a process of said utilization restriction information rewriting unit, a step of verifying said digital signature to rewrite said utilization restriction information,
and
said data creator terminal includes, as a process of said first conversion unit, a step of decrypting said change request list, which is transmitted from said user terminal, by using the private key 1,
includes, as a process of said first determination unit, a step of verifying the digital signature transmitted from said user terminal,
includes, as a process of said utilization restriction information setting unit, a step of inputting the possibility/impossibility of change of data utilization conditions, and
includes, as processes of said first conversion unit, the steps of: giving a digital signature to a result of said possibility/impossibility; and performing encryption by using the public key 2.

5. The data distribution system according to claim 3, wherein
said data creator terminal includes, as a process of said first determination unit, a step of determining whether data newly created by said data creating unit and utilization restriction information set by said utilization restriction information setting unit exist in pre-revision data stored in said distribution record database, and
includes, as a process of said first conversion unit, a step of outputting data for transmission to said user terminal as a revised version at a same utilization condition as the pre-revision data in accordance with the distribution record stored in said distribution record database and utilization restriction information when said first determination unit determines that the pre-revision data exists in said distribution record database,
whereby said data distribution system has a redistribution function which redistributes data to the previously distributed user terminal as the revised version.

6. The data distribution system according to claim 4, wherein
said data creator terminal includes, as a process of said first determination unit, a step of determining whether data newly created by said data creating unit and utilization restriction information set by said utilization restriction information setting unit exist in pre-revision data stored in said distribution record database, and
includes, as a process of said first conversion unit, a step of outputting data for transmission to said user terminal as a revised version at a same utilization condition as the pre-revision data in accordance with the distribution record stored in said distribution record database and utilization restriction information when said first determination unit determines that the pre-revision data exists in said distribution record database,
whereby said data distribution system has a redistribution function which redistributes data to the previously distributed user terminal as the revised version.

7. The data distribution system according to claim 5, wherein
said user terminal includes, as a process of said utilization item input unit, a step of inputting a redistribution destination,
includes, as processes of said second conversion unit, the steps of: creating said redistribution destination and said data identification information extracted from said utilization restriction information retrieving unit as one redistribution record data; performing encryption for said redistribution record data by using the public key 1; and giving a digital signature to said redistribution record data; and
includes, as a process of said second communication unit, a step of transmitting said redistribution record data to said user terminal,
and
said data creator terminal includes, as a process of said first communication unit, a step of receiving said redistribution record data,
includes, as a process of said first conversion unit, a step of decrypting the encrypted redistribution record data by using the private key 1, and
includes, as processes of said first determination unit, the steps of: verifying the digital signature given to said redistribution record data; and adding said redistribution record data to said distribution record data to record the data to said distribution record database.

8. The data distribution system according to claim 6, wherein
said user terminal includes, as a process of said utilization item input unit, a step of inputting a redistribution destination,
includes, as processes of said second conversion unit, the steps of: creating said redistribution destination and said data identification information extracted from said utilization restriction information retrieving unit as one redistribution record data; performing encryption for said redistribution record data by using the public key 1; and giving a digital signature to said redistribution record data; and
includes, as a process of said second communication unit, a step of transmitting said redistribution record data to said user terminal, and
said data creator terminal includes, as a process of said first communication unit, a step of receiving said redistribution record data,
includes, as a process of said first conversion unit, a step of decrypting the encrypted redistribution record data by using the private key 1, and
includes, as processes of said first determination unit, the steps of: verifying the digital signature given to said redistribution record data; and adding said redistribution record data to said distribution record data to record the data to said distribution record database.

9. The data distribution system which has a data creator terminal, a data user terminal and a management center, wherein
said data creator terminal comprises:
a data creating unit which creates data;
a utilization restriction information setting unit which sets utilization restriction information in said user terminal;
a third conversion unit which converts said data and said utilization restriction information into distribution format data;
a third communication unit which communicates with said management center; and
a third determination unit which verifies whether a change request of the utilization restriction information from said user terminal has been transmitted from a valid user terminal,
said management center comprises:
a fourth communication unit which communicates with said data creator terminal and said user terminal;
a fourth conversion unit which converts said distribution format data received through said fourth communication unit into a recordable form;
a fourth determination unit which determines whether said distribution format data is distributable and recordable and which also determines whether an authorization for the change request of the utilization restriction information from said user terminal has been transmitted from a valid user terminal;
a center database which preserves a distribution record of said data to said user terminal and a revision record of said utilization restriction information; and
a center database communication unit which inputs and outputs data to said center database, and
said user terminal comprises:
a fifth communication unit which communicates with said management center;
a storage medium which records said distribution format data;
a utilization item input unit which inputs at least one utilization item for using said distribution format data preserved in said storage medium;
a user information input unit which inputs information relating to a user of said user terminal;
a utilization restriction information retrieving unit which retrieves utilization restriction information from said distribution format data preserved in said storage medium;
a fifth determination unit which determines to be permitted of execution of the utilization item or not in said user terminal for said distribution format data on the basis of said utilization restriction information, said utilization item and said user information;
a utilization process unit which executes said utilization item for said distribution format data on the basis of a determination result performed by said fifth determination unit;
a change request input unit which inputs a change request of said utilization restriction information;
a fifth conversion unit which converts said change request inputted through said change request input unit into a form transmittable to said management center; and
a utilization restriction information rewriting unit which causes said change request to be integrated into said distribution format data in said storage medium when said change request has been authorized by said data creator terminal.

10. The data distribution system according to claim 9, wherein,
said data creator terminal includes, as processes of said third conversion unit, the steps of: storing data identification information for uniformly defining said distribution format data when creating said distribution format data; encrypting said data by using a secret key for encrypting by a secret key cryptography to store said data in said distribution format data; storing said secret key in said distribution format data; storing said utilization restriction information in said distribution format data; calculating a hash value of said utilization restriction information to store the hash value in said distribution format data; giving a digital signature to said distribution format data; and encrypting said distribution format data by using a public key 5 for encrypting by public key cryptography,
said management center includes, as processes of said fourth conversion unit, the steps of: performing decryption by using a private key 5 for decrypting the distribution format data encrypted by said public key 5; and encrypting said distribution format data, which is decrypted, by using a public key 2 for encrypting by public key cryptography, and
includes, as processes of said fourth determination unit, the steps of: verifying the digital signature given to said distribution format data; and hash converting said utilization restriction information from said distribution format data to compare said utilization restriction information with the hash value in the distribution format data, and
said user terminal includes, as a process of said fifth conversion unit, a step of decrypting the distribution format data, which is encrypted by using said public key 2, by using a private key 2,
includes, as processes of said utilization restriction information retrieving unit, the steps of: retrieving said utilization restriction information from the distribution format data; and calculating a hash value of said utilization restriction information to compare the hash value with a hash value in said distribution format data, and
includes, as a process of said utilization process unit, a step of decrypting the encrypted data by using said secret key.

11. The data distribution system according to claim 9, wherein,
said user terminal includes, as processes of said fifth conversion unit, the steps of: converting an input from said change request input unit and an input from said user information input unit into one change request list; giving a digital signature to said change request list; and performing encryption for said change request list by using the public key 5,
includes, as processes of said fifth determination unit, the steps of: decrypting the determination result encrypted by using the public key 2, by using the private key 2; and verifying the digital signature given to said determination result, and
includes, as a process of said utilization restriction information rewriting unit, a step of verifying the digital signature to rewrite said utilization restriction information,
said management center includes, as processes of said fourth conversion unit, the steps of: decrypting the received change request list by using the private key 5; encrypting said change request list by using the public key 4; decrypting a determination result encrypted by said public key 5, by using said private key 5; giving a digital signature to the determination result; and encrypting the determination result, to which the digital signature is given, by using said public key 2, and
includes, as processes of said fourth determination unit, the steps of: verifying the digital signature given to the change request list transmitted from said user terminal; and verifying the digital signature of the determination result decrypted by said fourth conversion unit,
and
said data creator terminal comprises a display unit which displays said change request list in which the digital signature is verified as a process of said first determination unit,
includes, as a process of said third determination unit, a step of verifying the digital signature given to said management center,
includes, as a process of said utilization restriction information setting unit, a step of inputting the possibility/impossibility of said change request, and
includes, as processes of said third conversion unit, the steps of: performing decryption by using the private key 4; giving a digital signature to the determination result of said possibility/impossibility; and performing encryption by using said public key 5 for encrypting by public key cryptography.

12. The data distribution system according to claim 10, wherein,
said user terminal includes, as processes of said fifth conversion unit, the steps of: converting an input from said change request input unit and an input from said user information input unit into one change request list; giving a digital signature to said change request list; and performing encryption for said change request list by using the public key 5,
includes, as processes of said fifth determination unit, the steps of: decrypting the determination result encrypted by using the public key 2, by using the private key 2; and verifying the digital signature given to said determination result, and
includes, as a process of said utilization restriction information rewriting unit, a step of verifying the digital signature to rewrite said utilization restriction information,
said management center includes, as processes of said fourth conversion unit, the steps of: decrypting the received change request list by using the private key 5; encrypting said change request list by using the public key 4; decrypting a determination result encrypted by said public key 5, by using said private key 5; giving a digital signature to the determination result; and encrypting the determination result, to which the digital signature is given, by using said public key 2, and
includes, as processes of said fourth determination unit, the steps of: verifying the digital signature given to the change request list transmitted from said user terminal; and verifying the digital signature of the determination result decrypted by said fourth conversion unit,
and
said data creator terminal comprises a display unit which displays said change request list in which the digital signature is verified as a process of said first determination unit,
includes, as a process of said third determination unit, a step of verifying the digital signature given to said management center,
includes, as a process of said utilization restriction information setting unit, a step of inputting the possibility/impossibility of said change request, and
includes, as processes of said third conversion unit, the steps of: performing decryption by using the private key 4; giving a digital signature to the determination result of said possibility/impossibility; and performing encryption by using said public key 5 for encrypting by public key cryptography.

13. The data distribution system according to claim 11, wherein
said management center includes, as a process of said fourth determination unit, a step of determining whether pre-revision data exists in said center database as said distribution format data,
includes, as a process of said fourth conversion unit, a step of transmitting data to said user terminal as a revised data at a same condition as the pre-revision data in accordance with a distribution record of said distribution record database and the utilization restriction information when said fourth determination unit determines that the pre-revision data exists in said center database,
whereby said data distribution system has a redistribution function which redistributes data as the revised data to the previously distributed user terminal.

14. The data distribution system according to claim 12, wherein
said management center includes, as a process of said fourth determination unit, a step of determining whether pre-revision data exists in said center database as said distribution format data,
includes, as a process of said fourth conversion unit, a step of transmitting data to said user terminal as a revised data at a same condition as the pre-revision data in accordance with a distribution record of said distribution record database and the utilization restriction information when said fourth determination unit determines that the pre-revision data exists in said center database,
whereby said data distribution system has a redistribution function which redistributes data as the revised data to the previously distributed user terminal.

15. The data distribution system according to claim 13, wherein
said user terminal includes, as a process of said utilization item input unit, a step of inputting a redistribution destination, and
includes, as processes of said fifth conversion unit, the steps of: creating both said redistribution destination and data identification information extracted by said utilization restriction information retrieving unit as one redistribution record data; performing encryption for said redistribution record data by using the public key 5; and giving a digital signature to said redistribution record data,
and
said management center includes, as processes of said fourth communication unit, the steps of: transmitting said redistribution record data to said data creator terminal; and receiving said redistribution destination data,
includes, as a process of said fourth conversion unit, a step of decrypting the encrypted redistribution record data by using said private key 5, and
includes, as processes of said fourth determination unit, the steps of: verifying the digital signature given to said redistribution record; and adding said redistribution record data to said distribution record data to record the data to said center database.

16. The data distribution system according to claim 14, wherein
said user terminal includes, as a process of said utilization item input unit, a step of inputting a redistribution destination, and
includes, as processes of said fifth conversion unit, the steps of: creating both said redistribution destination and data identification information extracted by said utilization restriction information retrieving unit as one redistribution record data; performing encryption for said redistribution record data by using the public key 5; and giving a digital signature to said redistribution record data,
and
said management center includes, as processes of said fourth communication unit, the steps of: transmitting said redistribution record data to said data creator terminal; and receiving said redistribution destination data,
includes, as a process of said fourth conversion unit, a step of decrypting the encrypted redistribution record data by using said private key 5, and
includes, as processes of said fourth determination unit, the steps of: verifying the digital signature given to said redistribution record; and adding said redistribution record data to said distribution record data to record the data to said center database.

17. The data distribution system according to claim 1,
wherein said utilization restriction information is individually set in units of user terminals, and among a display of said data, possibility/impossibility of copying, possibility/impossibility of copying, permissible number of copying, permissible generation number of copying, and permissible number of copying in units of generation numbers, at least one or more information is set in said utilization restriction information.

18. The data distribution system according to claim 6,
wherein said utilization restriction information is individually set in units of user terminals, and among a display of said data, possibility/impossibility of copying, possibility/impossibility of copying, permissible number of copying, permissible generation number of copying, and permissible number of copying in units of generation numbers, at least one or more information is set in said utilization restriction information.

19. The data distribution system according to claim 1, wherein said utilization restriction information comprises display area restriction information.

20. The data distribution system according to claim 6, wherein said utilization restriction information comprises display area restriction information.

21. The data distribution system according to claim 19, wherein
said data is of capable of displaying, including a text and an image,
said utilization process unit includes a step of displaying for viewing said data, and size information of said display unit, display magnification information of said data displayed in said display unit, and non-display position information showing a portion which is set as non-display at the user terminal.

22. The data distribution system according to claim 20, wherein
said data is of capable of displaying, including a text and an image,
said utilization process unit includes a step of displaying for viewing said data, and
said display area restriction information is at least one or more information set among size information of said display unit, display magnification information of said data displayed in said display unit, and non-display position information showing a portion which is set as non-display at the user terminal.

23. The data distribution system according to claim 1, wherein
said utilization restriction information includes time information,
said change request input unit includes a step of setting said time information,
said second determination unit includes a step of comparing said time information with a time at which a utilization item is inputted in a case when using said data in said user terminal, to determine possibility/impossibility of utilization.

24. The data distribution system according to claim 22, wherein
said utilization restriction information includes time information,
said change request input unit includes a step of setting said time information,
said second determination unit includes a step of comparing said time information with a time at which a utilization item is inputted in a case when using said data in said user terminal, to determine possibility/impossibility of utilization.

25. The data distribution system according to claim 23, wherein
at least one of said management center and said data creator terminal comprises a time measuring unit,
said second communication unit communicates with said management center or said data creator terminal when using the data if said second determination unit has retrieved time information from the data, and retrieves management time information measured by said time measuring unit, and
said second determination unit compares said time information with said management time information.

26. The data distribution system according to claim 24, wherein
at least one of said management center and said data creator terminal comprises a time measuring unit,
said second communication unit communicates with said management center or said data creator terminal when using the data if said second determination unit has retrieved time information from the data, and retrieves management time information measured by said time measuring unit, and
said second determination unit compares said time information with said management time information.
